# EUROPEAN PATENT APPLICATION

(11) **EP 2 477 395 A1**
(43) Date of publication of application: **18.07.2012**
(21) Application number: 10814981.6
(22) Date of filing: 07.09.2010
(51) Int. Cl.: H04N 7/173

(54) **METHOD AND ELECTRONIC PROGRAM GUIDE SERVER FOR INTERACTIVE INTERNET PROTOCOL TELEVISION CHILD LOCK CONTROL**

(30) Priority: 08.09.2009 CN 200910171700
(71) Applicant: ZTE Corporation, Shenzhen, Guangdong 518057 (CN)
(72) Inventor: YUAN, Yang, Shenzhen Guangdong 518057 (CN)
(74) Representative: Mozzi, Matteo
(86) International application number: PCT/CN2010/076675
(87) International publication number: WO 2011/029379

(57) **Abstract**

A method and an electronic program guide server for interactive internet protocol television child lock control are disclosed in the present invention. The method includes that: an Electronic Program Guide (EPG) server provides a user with a child lock configuration interface, and receives the child lock configuration that the user sets via the child lock configuration interface; after the EPG server receives the information of the video-On-Demand (VOD) or switching to a predetermined channel from the user, according to the child lock configuration, the EPG server determines whether to play the predetermined channel directly for the user. The invention conveniently realizes different functions of child lock without depending on a set-top box of a user terminal, and has universal applicability.

## Description

### Field of the Invention

The present invention relates to the communication field, and in particular to a method for controlling child lock of an Internet protocol television (abbreviated as IPTV) and an electronic program guide (abbreviated as EPG) server.

### Background of the Invention

Internet protocol television is a technology which provides various interactive services including digital television for household users by using cable television network and is integrated with various technologies such as Internet, multimedia, and communications, and the users generally access the IPTV in the form of network set-top box + common television set at home.

In consideration of protecting children from being influenced by harmful information, common televisions provide a child lock function, i.e. some channels which play R-rated contents being locked so as to prevent children from watching. The child lock method provided in the prior art is generally to store lock information of the channels on televisions. When a user changes the channel, for example, changing to a channel which is locked, then a password confirmation window will be popped up, and an unauthorized user cannot access this channel for being unable to provide the password, which method achieves the object of preventing the unauthorized user from watching a channel. However, such a manner of providing child lock function has to rely on user terminals, and whether this function can be performed totally depends upon whether a terminal being used provides the child lock function. And since the manufacturers of the terminals and their types are different, not all the users can set the child lock function, which causes inconvenience during usage.

As to the problem in relevant art that the implementation of the method for providing child lock relies on whether the terminal used by the user providing the child lock function, currently still no effective solution is proposed.

### Summary of the Invention

The present invention is proposed regarding the problem that the implementation of the method for providing child lock relies on whether the terminal used by the user provides the child lock function, for this end, the main object of the present invention is to provide a method for controlling the child lock of IPTV and an EPG server so as to solve at least one of the above problems.

In order to achieve the above object, a method for controlling the child lock of an Internet protocol television is provided according to one aspect of the present invention.

The method for controlling child lock of an Internet protocol television comprises: an electronic program guide (EPG) server providing a child lock setting interface for a user and receiving a child lock setting set by the user via the child lock setting interface; and after the EPG server receives information about demanding or changing to a predetermined channel from the user, the EPG server judging whether to directly play the predetermined channel for the user according to the child lock setting.

Preferably, the child lock setting comprises at least one of the following: user rating and locked channels.

Preferably, before the EPG server provides the child lock setting interface to the user and receives the child lock setting set by the user via the child lock setting interface, the above method further comprises: a management server setting channel related information, wherein the channel related information includes at least one of the following: channel ratings and whether a channel allows the user to set child lock; and the management server synchronizing the channel related information to the EPG server.

Preferably, the EPG sever judging whether to directly play the predetermined channel for the user according to the child lock setting comprises: in the situation where the child lock setting includes the user rating, judging whether to directly play the predetermined channel for the user according to the user rating and the channel rating; and in the situation where the child lock setting includes the locked channels, judging whether to directly play the predetermined channel for the user according to whether the predetermined channel exists in the locked channels.

Preferably, the management server synchronizes the channel related information to the EPG server according to a predetermined policy, wherein the predetermined policy includes: regular synchronization, periodic synchronization or synchronization after the EPG initiates a synchronization request.

Preferably, after the EPG sever judges whether to directly play the predetermined channel for the user according to the child lock setting, the method further comprises: in the situation where the EPG server judges not to directly play the predetermined channel for the user, the EPG server instructs the user to input a child lock password; in the situation where the user inputs the correct child lock password, the EPG allows the user to watch the predetermined channel, otherwise, the EPG will not allow the user to watch the predetermined channel.

In order to achieve the above objects, an EPG server is provided according to another aspect of the present invention.

The EPG server according to the present invention comprises: a setting module configured to provide a child lock setting interface for a user and receive a child lock setting set by the user via the child lock setting interface; a receiving module configured to receive information about demanding or changing to a predetermined channel from the user; and a judging module configured to judge whether to directly play the predetermined channel for the user according to the child lock setting received by the setting module.

Preferably, the child lock setting comprises at least one of the following: user rating and locked channels.

Preferably, the judging module comprises: a first judging sub-module configured to, in the situation where the child lock setting includes the user rating, judge whether to directly play the predetermined channel for the user according to a correspondence relationship between the user rating and the obtained channel rating; and a second judging sub-module configured to, in the situation where the child lock setting includes the locked channels, judge whether to directly play the predetermined channel for the user according to whether the predetermined channel exists in the locked channels.

Preferably, the EPG server further comprises: an authentication module configured to, in the situation where the judging module judges not to directly play the predetermined channel for the user, require the user to input a child lock password, and in the situation where the user inputs the correct child lock password, allowing the user to watch the predetermined channel, otherwise, not allowing the user to watch the predetermined channel.

By way of the present invention, the use of an EPG server to carry out child lock control and authentication solves the problem that the implementation of the method for providing child lock relies on whether the terminal used by the user providing the child lock function, which can conveniently achieve various child lock functions, and the implementation of this solution does not rely on the set-top box of the user terminal and is applicable universally.

### Brief Description of the Drawings

The drawings illustrated herein provide a further understanding of the present invention and form a part of the present application. The exemplary embodiments and the description thereof are used to explain the present invention without unduly limiting the scope of the present invention. In the drawings:
Fig. 1 is a flowchart of a method for controlling the child lock of an Internet protocol television according to the embodiments of the present invention;
Fig. 2 is a detailed flowchart of the method for controlling the child lock of an Internet protocol television according to example 1;
Fig. 3 is a detailed flowchart of the method for controlling the child lock of an Internet protocol television according to example 1;
Fig. 4 is a structural block diagram of an EPG server according to the embodiments of the present invention;
Fig. 5 is a structural block diagram of a judging module in the EPG server according to the embodiments of the present invention; and
Fig. 6 is a detailed structural block diagram of the EPG server according to the embodiments of the present invention.

### Detailed Description of Embodiments

Regarding the problem in relevant art that the implementation of the method for providing child lock relies on whether the terminal used by the user provides the child lock function, an improved solution for controlling the child lock of an Internet protocol television is provided according to the embodiments of the invention. The processing principle of this solution is as follows: an electronic program guide (EPG) server receives the child lock setting from a user; and the EPG server judges whether the channel selected by the user can be directly watched according to the child lock setting. This solution is capable of conveniently achieving various child lock functions, and the implementation of this solution does not rely on the set-top box of the user terminal and is applicable universally.

The present invention will be described hereinafter in detail with reference to the accompanying drawings and in conjunction with embodiments. It needs to be noted that the embodiments of the present application and the features in the embodiments can be combined with each other if there is no conflict.

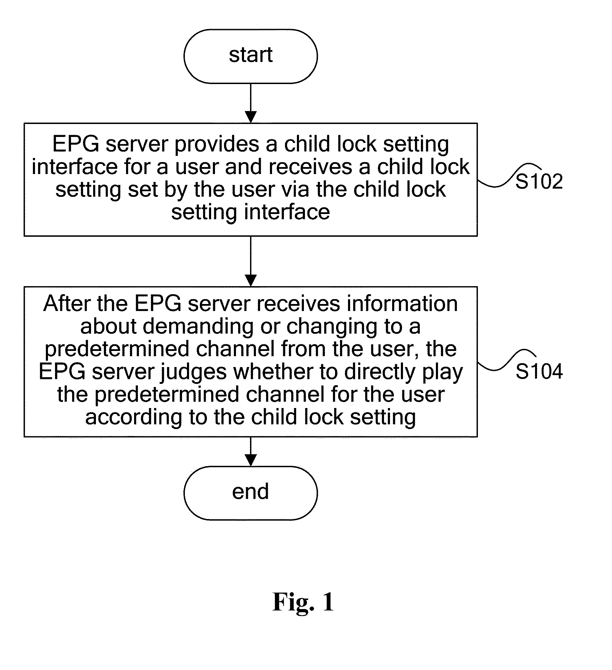

A method for controlling the child lock of an Internet protocol television is provided according to the embodiments of the present invention, and Fig. 1 is a flowchart of a method for controlling the child lock of an Internet protocol television according to the embodiments of the present invention. As shown in Fig. 1, this method comprises steps S102 to S104 as follows:
Step S102: an EPG server provides a child lock setting interface for a user and receives a child lock setting set from the user via the child lock setting interface; and
Step S104: after the EPG server receives information about demanding or changing to a predetermined channel from the user, the EPG server judges whether to directly play the predetermined channel for the user according to the child lock setting.

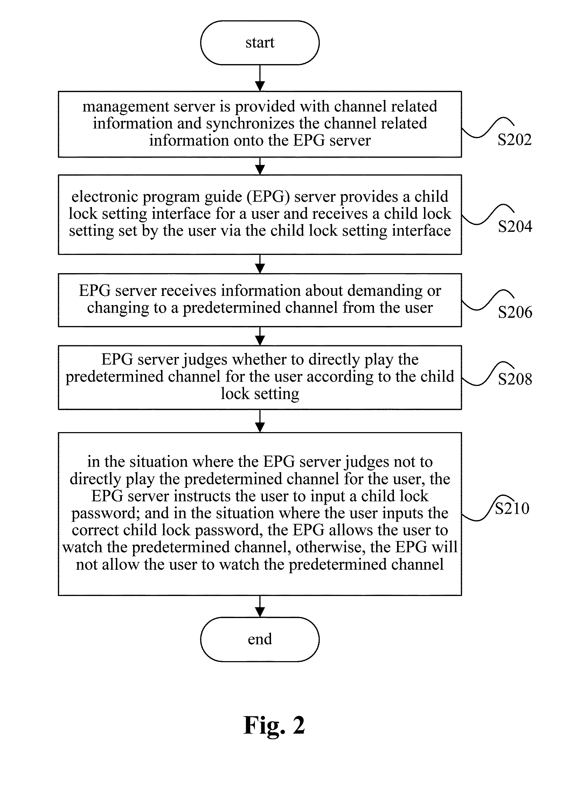

Fig. 2 is a detailed flowchart of the method for controlling the child lock of an Internet protocol television according to the embodiments of the present invention.

Step S202: a management server is provided with channel related information, wherein the channel related information includes at least one of the following: channel ratings and whether a channel allows the user to set child lock; and the management server synchronizes the channel related information to the EPG server. The synchronization manner can be the file transfer protocol (abbreviated as ftp) manner or transfer control protocol (abbreviated as tcp) manner, and during its practical application, the channel related information can be synchronized to the EPG server according to a predetermined policy, wherein the predetermined policy includes: regular synchronization, periodic synchronization or synchronization after the EPG initiates a synchronization request.

Step S204: the electronic program guide (EPG) server provides a child lock setting interface for a user and receives a child lock setting set by the user via the child lock setting interface, and the child lock setting can comprise at least one of the following: user rating and locked channels.

Step S206: the EPG server receives information about demanding or changing to a predetermined channel from the user.

Step S208: the EPG server judges whether to directly play the predetermined channel for the user according to the child lock setting. In particular, in the situation where the child lock setting includes the user rating, judge whether to directly play the predetermined channel for the user according to a correspondence relationship between the user rating and the channel rating; and in the situation where the child lock setting includes the locked channels, judge whether to directly play the predetermined channel for the user according to whether the predetermined channel exists in the locked channels.

Step S210: in the situation where the EPG server judges not to directly play the predetermined channel for the user, the EPG server instructs the user to input a child lock password; and in the situation where the user inputs the correct child lock password, the EPG allows the user to watch the predetermined channel, otherwise, the EPG will not allow the user to watch the predetermined channel.

The implementing process of the embodiments of the present invention will be described in detail in conjunction with examples hereinafter.

### Example 1

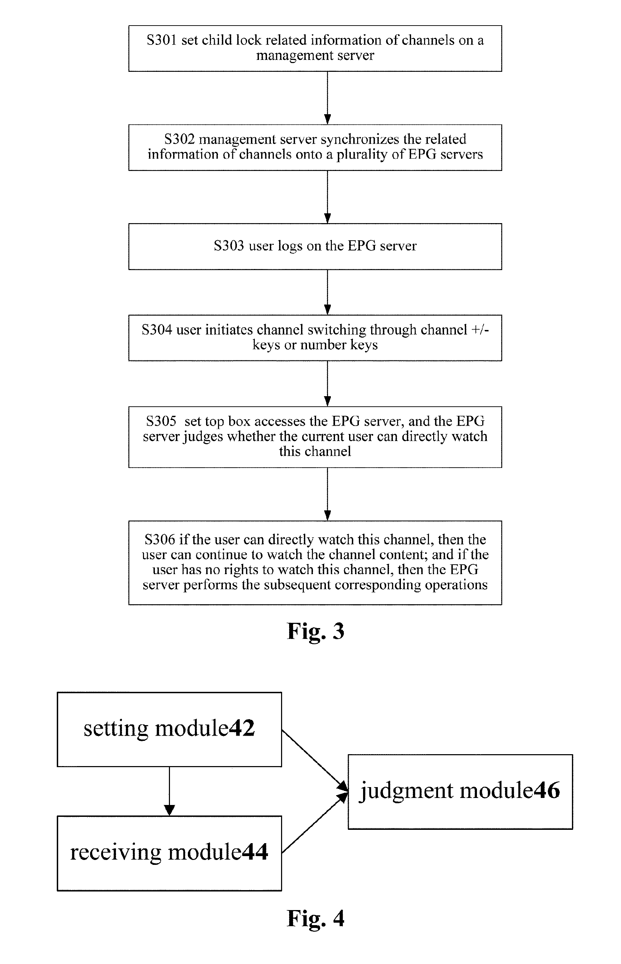

Fig. 3 is a detailed flowchart of the method for controlling the child lock of an Internet protocol television according to example 1, and as shown in Fig. 3, during its practical application, the method can comprise the following procedure:
Step S301: on a management server, set child lock related information of channels, i.e. the above channel related information, and in particular the channel ratings or whether a certain channel allows the user to lock can be set.
Step S302: the management server synchronizes the related information of channels to a plurality of EPG servers which are deployed in a distributed way regularly, periodically, or after the EPG server initiates a synchronization request, and the synchronization manner can be the ftp manner or can be the manner of tcp messages.
Step S303: the user logs on the EPG server via the set top box and downloads channel information, wherein information such as username and password is carried in the user login request, and the EPG server authenticates whether to allow the login or load user related data according to these information.
Step S304: the user initiates an operation of channel switching or demanding toward the EPG server through the channel +/- keys or number keys on the remote controller to indicate that the user selects a certain channel, i.e. the above predetermined channel.
Step S305: the set top box accesses the EPG server, and the EPG server judges whether the current user can directly watch this channel, wherein the condition of judging whether to allow the user to watch can be the correspondence relationship between the user rating and the channel rating and can also be whether this channel already exists in the locked channels set by the user, the above user rating and locked channels set by the user being sent to the EPG server by the user in advance.
Step S306: if the user can directly watch this channel, then the user can continue to watch the contents of the channel; if the user has no rights to watch this channel, then the EPG server performs the subsequent corresponding operations. In particular, if the user rating and channel rating are mismatched or this channel exists in the child lock table set by the user, i.e. in the locked channels, then the EPG server will prompt that the user has no rights to watch the channel and requires the user to input the child lock password, and it can be watched only after the authentication is passed.

### Example 2

The method provided by the embodiments of the present invention will be described in detail by taking the child lock setting being user rating for example hereinafter.

The administrator carries out content classification management on the channels in the management server, and the classification standards can adopt the Motion Picture Association of American (abbreviated as MPAA) ratings, which classification is a rating classification based on the standards of Motion Picture Association of American. The MPAA ratings are generally divided into:
Rated G (GENERAL AUDIENCES): All ages admitted;
Rated PG (PARENTAL GUIDANCE SUGGESTED): Some material may not be suitable for children, some scenes may cause discomforts, and the parents are suggested to accompany the children to watch;
Rated PG-13 (PARENTS STRONGLY CAUTIONED): Some material may be inappropriate for children under 13, and children under 13 especially should be accompanied by the parents to watch;
Rated R (RESTRICTED): Under 17 requires accompanying parent or adult guardian;
Rated NC-17 (NO ONE 17 AND UNDER ADMITTED): 17 and under 17 are not admitted.

After the administrator has set the ratings for channels, the rating information of the channels will be synchronized onto the EPG server. The user initiates a request toward the EPG server when changing the channel. The EPG server will judge whether this user has a right to watch the current channel according to the rating set for the user (i.e. user rating) and this channel rating. The detailed judgment policy can be set voluntarily, which is not limited by the embodiments of the present invention For example, if the rating set for the user is rating PG, then the EPG server will judge all the channels the ratings of which are above rating PG (whether rating PG is included therein depends on the detailed judgment policy) as that the user cannot directly watch them.

If the user has a right to watch, then the user is allowed to watch directly; and if the user has no rights to watch, then the user is prompted to input the child lock password and can watch only after the authentication is passed.

### Example 3

The method provided by the embodiments of the present invention will be described in detail by taking the child lock setting being locked channels for example hereinafter.

The user can customize the child lock list, i.e. the above locked channels, which list contains information about channels which are set by the user as not being watched directly. The administrator can set the channels which allow the user to set child lock on the management server in advance, and the user can decide whether to add these channels which are allowed to be locked by the system into the self-defined child lock list on the setting page of the EPG server. The user initiates a request toward the EPG server when changing the channel, and the EPG server will judge whether the current channel exists in the child lock list defined by the user himself. If it does not exist, then the user is allowed to watch directly; and if it exists, then the user is prompted to input the child lock password and can watch only after the authentication is passed.

An EPG server is provided according to the embodiments of the present invention, which server can be used to implement the above method for controlling IPTV child lock, and Fig. 4 is a structural block diagram of the EPG server according to the embodiments of the present invention. As shown in Fig. 4, the EPG server comprises: a setting module 42 configured to provide a child lock setting interface for a user and receive a child lock setting set by the user via the child lock setting interface; a receiving module 44 connected to the setting module 42 and configured to receive information about demanding or changing to a predetermined channel from the user; and a judging module 46 connected to the setting module 42 and the receiving module 44 and configured to judge whether to directly play the predetermined channel for the user according to the child lock setting received by the setting module 42.

In this case, the child lock settings comprise at least one of the following: user rating and locked channels.

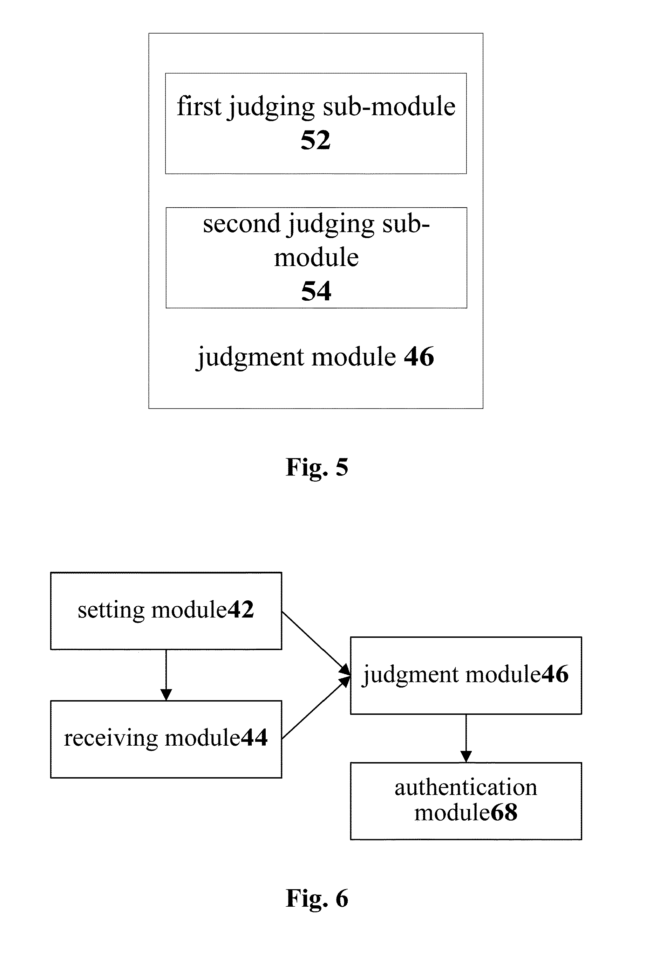

Fig. 5 is a structural block diagram of a judging module in the EPG server according to the embodiments of the present invention, and as shown in Fig. 5, the judging module 46 comprises: a first judging sub-module 52 configured to, in the situation where the child lock setting includes the user rating, judge whether to directly play the predetermined channel for the user according to the correlation between the user rating and the obtained channel rating; and a second judging sub-module 54 configured to, in the situation where the child lock setting includes the locked channels, judge whether to directly play the predetermined channel for the user according to whether the predetermined channel exists in the locked channels.

Fig. 6 is a detailed structural block diagram of the EPG server according to the embodiments of the present invention And as shown in Fig. 6, on the basis of setting module 42, receiving module 44, and judging module 46, this EPG server can further comprise: an authentication module 68 connected to the judgment module 46 and configured to, in the situation where the judging module 46 judges not to directly play the predetermined channel for the user, require the user to input a child lock password, and in the situation where the user inputs the correct child lock password, allow the user to watch the predetermined channel, otherwise, not allow the user to watch the predetermined channel.

In summary, the solution for controlling the child lock of the Internet protocol television provided by the embodiments of the present invention can achieve various child lock functions conveniently, and the implementation of this solution is independent from the set top box of the user terminal and is applicable universally.

It needs to be noted that the step shown in the flowcharts of the drawings can be executed in a computer system such as a set of computer executable instructions, and although the logical order is shown in the flowcharts, in some cases the steps shown or described here can be executed in an order different from this in some circumstances.

Apparently, those skilled in the art shall understand that the above-mentioned modules and steps of the present invention can be realized by using general purpose calculating device, can be integrated in one calculating device or distributed on a network which consists of a plurality of calculating devices, and alternatively they can be realized by using the executable program code of the calculating device, so that consequently they can be stored in the storing device and executed by the calculating device, or they are made into integrated circuit module respectively, or a plurality of modules or steps thereof are made into one integrated circuit module. In this way, the present invention is not limited to any particular combination of hardware and software.

Above description is only to illustrate the preferred embodiments but not to limit the present invention. Various alternations and changes to the present invention are apparent to those skilled in the art. The scope defined in claims shall comprise any medication, equivalent substitution and improvement within the spirit and principle of the present invention.

## Claims

1. A method for controlling child lock of an Internet protocol television, **characterized by** comprising:
an electronic program guide (EPG) server providing a child lock setting interface for a user and receiving a child lock setting set by the user via the child lock setting interface; and
after the EPG server receives information about demanding or changing to a predetermined channel from the user, the EPG server judging whether to directly play the predetermined channel for the user according to the child lock setting.

2. The method according to Claim 1, **characterized in that** the child lock setting comprises at least one of the following: user rating and locked channels.

3. The method according to Claim 2, **characterized in that** before the EPG server provides the child lock setting interface to the user and receives the child lock setting set by the user via the child lock setting interface, the method further comprises:
a management server being provided with channel related information, wherein the channel related information includes at least one of the following: channel ratings and whether a channel allows the user to set child lock; and
the management server synchronizing the channel related information to the EPG server.

4. The method according to Claim 3, **characterized in that** the EPG sever judging whether to directly play the predetermined channel for the user according to the child lock setting comprises:
in the situation where the child lock setting includes the user rating, judging whether to directly play the predetermined channel for the user according to a corresponding relationship between the user rating and a rating of the predetermined channel; and
in the situation where the child lock setting includes the locked channels, judging whether to directly play the predetermined channel for the user according to whether the predetermined channel exists in the locked channels.

5. The method according to Claim 3, **characterized in that** the management server synchronizes the channel related information to the EPG server according to a predetermined policy, wherein the predetermined policy includes: regular synchronization, periodic synchronization or synchronization after the EPG initiates a synchronization request.

6. The method according to any one of Claims 1-5, **characterized in that** after the EPG sever judges whether to directly play the predetermined channel for the user according to the child lock setting, the method further comprises:
in the situation where the EPG server judges not to directly play the predetermined channel for the user, the EPG server instructs the user to input a child lock password; and in the situation where the user inputs the correct child lock password, the EPG allows the user to watch the predetermined channel, otherwise, the EPG will not allow the user to watch the predetermined channel.

7. An electronic program guide (EPG) server, **characterized by** comprising:
a setting module configured to provide a child lock setting interface for a user and receive a child lock setting set by the user via the child lock setting interface;
a receiving module configured to receive information about demanding or changing to a predetermined channel from the user; and
a judging module configured to judge whether to directly play the predetermined channel for the user according to the child lock setting received by the setting module.

8. The EPG server according to Claim 7, **characterized in that** the child lock setting comprises at least one of the following: user rating and locked channels.

9. The EPG server according to Claim 8, **characterized in that** the judging module comprises:
a first judging sub-module configured to, in the situation where the child lock setting includes the user rating, judge whether to directly play the predetermined channel for the user according to a correspondence relationship between the user rating and an obtained channel rating; and
a second judging sub-module configured to, in the situation where the child lock setting includes the locked channels, judge whether to directly play the predetermined channel for the user according to whether the predetermined channel exists in the locked channels.

10. The EPG server according to Claim 8 or 9, **characterized in that** the EPG server further comprises:
an authentication module configured to, in the situation where the judging module judges not to directly play the predetermined channel for the user, require the user to input a child lock password, and in the situation where the user inputs the correct child lock password, allow the user to watch the predetermined channel, otherwise, not allow the user to watch the predetermined channel.
